# FASCICULE DE BREVET EUROPEEN

(11) **EP 2 009 334 B1**
(45) Date de publication et mention de la délivrance du brevet: **08.09.2010**
(21) Numéro de dépôt: 07301148.8
(22) Date de dépôt: 26.06.2007
(51) Int. Cl.: F16K 5/06

(54) **Vanne de sectionnement de canalisation ou réseau de vide avec entrée d'urgence**
Absperrschieber für Vakuumleitung oder -netz mit Notzugang
Sectional valve or vacuum network with emergency intake

(43) Date de publication de la demande: 31.12.2008
(73) Titulaire: Air Liquide Sanità Service S.p.A., 20148 Milano (IT)
(72) Inventeur: Demerville, Nathalie, 20030 Bovisio Masciago (IT); Denando, Vittoria, 20019 Settimo Milanese (IT); Deneux, Patrick, 20100 Milano (IT)
(74) Mandataire: Pittis, Olivier

(56) Documents cités:
- DE-A1- 3 239 255
- US-A- 2 708 450
- US-A- 3 831 630

## Description

L'invention porte sur une vanne utilisable sur une canalisation ou un réseau de canalisations de vide, en particulier un réseau de canalisations de vide agencé au sein d'un bâtiment hospitalier.

Dans les salles d'opération, de soins d'urgence, de réanimation ou d'hospitalisation, il est habituel d'utiliser des gaz médicaux, tel qu'oxygène, air, mélanges N₂O/O₂..., pour traiter des patients à moyen terme et à long terme, ainsi que lors des interventions d'urgence. Ces gaz sont amenés jusqu'à leur site d'utilisation au sein de l'hôpital soit en étant conditionnés dans des bouteilles de gaz ou similaires, soit via une canalisation ou un réseau de canalisations de gaz agencées au sein de l'hôpital.

De même, il est également habituel d'y agencer une canalisation de vide ou un réseau de canalisations de vide, c'est-à-dire en dépression, parcourant lui aussi les différents sites ou salles où le vide doit être utilisé, notamment les salles de soin, les blocs d'opérations, les chambres... En effet, le vide y est utilisé pour aspirer différents liquides, tels le sang, des mucosités, des fluides corporels ou similaires, lors des soins apportés aux malades.

Un réseau de vide se compose d'une ou plusieurs canalisations au sein desquelles une dépression est maintenue au moyen d'une ou plusieurs pompes à vide ou d'autres dispositifs analogues de soutirage de vide. On parle de réseau en dépression ou de réseau de vide car la pression qui y règne est inférieure à la pression atmosphérique, c'est-à-dire inférieure à 10⁶ Pa (= 1 bar).

L'utilisation d'un réseau de vide en milieu hospitalier est notamment décrite dans le document EP-A-1026567 auquel on peut se reporter pour avoir davantage de détails sur ce type d'installation.

Or, il peut arriver que le réseau de vide ne puisse pas assurer son rôle normal car il présente une défaillance ou une interruption accidentelle et imprévisible, par exemple à cause de dommages causés aux conduits d'alimentation en fluides, aux organes de commande, de régulation et d'interruption de l'écoulement des différents fluides en circulation.

Il est alors nécessaire primordial de pouvoir assurer une continuité de la présence de vide au sein des différentes salles d'intervention ou similaires.

Pour ce faire, il a été proposé par demande de brevet européen n° 07300937.5 de la Demanderesse d'utiliser une unité fonctionnelle mobile permettant d'assurer une distribution momentanée du gaz médical et du vide comprenant une ou plusieurs bouteilles de gaz médical de secours pour assurer une continuité de distribution des gaz médicaux, ainsi qu'une pompe à vide permettant de créer une dépression dans la canalisation à laquelle elle est raccordée et y assurer ainsi une continuité de distribution du vide.

Or, un problème qui se pose est de pouvoir raccorder aisément et rapidement une telle unité mobile au réseau de vide de l'hôpital en cas de défaillance du réseau de vide afin d'éviter toute interruption de distribution du vide dans l'hôpital ou similaire. La défaillance sur le réseau centralisé de vide peut être due par exemple à un problème sur la centrale de vide ou bien sur le réseau de distribution, par exemple causée par une rupture de canalisations de vide externes durant des travaux d'entretien ou analogues .

Dit autrement, un but de l'invention de proposer un dispositif permettant de raccorder rapidement et simplement le réseau de vide à une unité mobile de vide ou toute autre source de vide de secours.

Le document US 2 708 450 décrit une vanne comme le préambule de la revendication 1.

Une solution de l'invention est une vanne de sectionnement avec entrée d'urgence, en particulier pour canalisation ou réseau de vide, comprenant un corps de vanne traversé par un passage principal de fluide entre un premier orifice située à une extrémité amont dudit passage principal et un deuxième orifice situé à une extrémité aval dudit passage principal (2), ledit corps de vanne comprenant en outre :
- un dispositif de commande agencé sur ledit passage principal, comportant un organe actionnable manuellement par un opérateur et mobile entre au moins :
   - une position d'ouverture dans laquelle ledit dispositif de commande autorise une communication fluidique entre les premier et deuxième orifices, et
   - une position de fermeture dans laquelle ledit dispositif de commande interrompt toute communication fluidique entre les premier et deuxième orifices, et
- un passage annexe de fluide, relié fluidiquement par son extrémité amont audit passage principal entre le dispositif de commande et le premier orifice, ledit passage annexe comprenant un troisième orifice à son extrémité aval, la vanne comprenant un dispositif d'obturation qui vient obturer le troisième orifice, lorsque le dispositif de commande est en position d'ouverture.

Selon le cas, la vanne de l'invention peut comprendre l'une ou plusieurs des caractéristiques suivantes :
- les extrémités amont et aval du passage principal portant les premier et deuxièmes orifices, respectivement, et l'extrémité aval du passage annexe portant le troisième orifice sont munies de moyens de raccordement aptes à et conçus pour permettre le raccordement de canalisations auxdites extrémités, de préférence les moyens de raccordement (4) sont ou comprennent des filetages ou des taraudages.
- le dispositif de commande comprend un organe rotatif actionnable par l'opérateur entre lesdites positions d'ouverture et de fermeture.
- le corps de vanne est formé de deux sous-unités venant se solidariser l'une à l'autre, la première sous-unité comportant la partie du passage principal comprenant l'extrémité aval dudit passage principal avec le deuxième orifice et le dispositif de commande, et la seconde sous-unité comportant la partie du passage principal comprenant l'extrémité amont dudit passage principal avec le premier orifice et le passage annexe avec le troisième orifice.
- un manomètre de dépression ou vacuomètre est relié au passage principal ou au passage annexe entre le dispositif de commande et le premier orifice ou le troisième orifice.
- le corps de vanne comporte un dispositif de fixation apte à et conçu pour fixer ledit corps de vanne à un support, en particulier à une paroi.
- le dispositif de commande est un robinet à bille du type tout ou rien.
- elle comporte un orifice permettant le raccordement d'un capteur de dépression.
- le passage annexe de fluide comprend un troisième orifice à son extrémité aval muni d'un bouchon fileté qui fait étanchéité quand il est fermé, de préférence ledit troisième orifice est conçu pour et adapté à la connexion d'un tube flexible relié à un dispositif de secours.

La structure et le fonctionnement d'une vanne de sectionnement du vide avec entrée d'urgence selon l'invention apte à coopérer avec une unité fonctionnelle mobile de secours est schématisée sur les Figures ci-annexées parmi lesquelles :
- la Figure 1 est un schéma d'une vanne de vide selon l'invention avec son support de fixation,
- les Figures 2a et 2b schématisent le fonctionnement de la vanne de la Figure 1,
- la Figure 3 est un schéma du fonctionnement interne de la vanne de la Figure 1 (vue de dessus),
- la Figure 4 est une vue éclatée de la vanne de la Figure 1 et
- la Figure 5 est une vue d'une unité fonctionnelle mobile de secours à laquelle peut être connectée la vanne de la Figure 1.

La vanne 1 de l'invention peut être installée sur une paroi, essentiellement en remplacement d'une éventuelle vanne de sectionnement du circuit de vide classique éventuellement raccordée à une installation centralisée d'aspiration comprenant une ou des pompes à vide, de préférence au moins 3 pompes de vide, de manière à pouvoir être raccordée à la prise de vide prévue sur la paroi arrière d'unité fonctionnelle mobile, telle celle décrite dans la demande de brevet européen n° 07300937.5, au moyen d'une canalisation adaptée, tel qu'un raccord flexible dont les extrémités opposées sont filetées.

La vanne 1 comprend deux sous-parties ou sous-unités 12, 13 solidaires l'une de l'autre, à savoir une première sous-unité 12 équipée d'un dispositif de commande 5, tel qu'un robinet à bille tout ou rien à commande manuelle, et une deuxième sous-unité 13 pour le raccordement à l'unité fonctionnelle 1 ou analogue.

A cette deuxième sous-unité 13 est associé un manomètre 11 de contrôle de la dépression dans le corps de vanne 1.

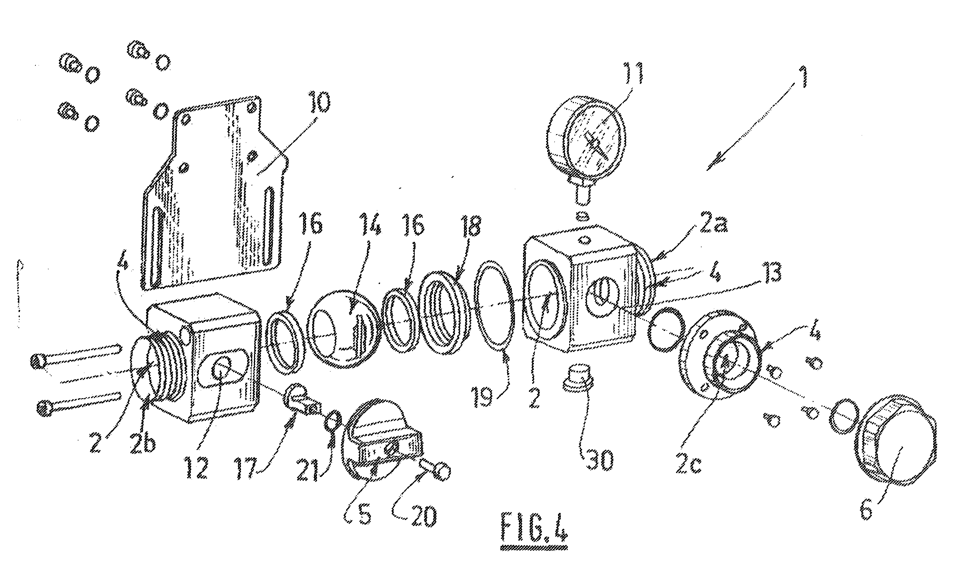

On peut aussi doter le corps de vanne 1 d'un capteur de pression agencé au niveau du troisième orifice 2c, par exemple un orifice dédié situé sous la vanne peut être prévu pour ce capteur 30, comme schématisé en Figure 4, situé à l'extrémité aval du passage annexe 22.

Les deux sous-unités 12, 13 sont reliées entre elles de la manière représentée dans la vue en partie éclatée de la figure 4.

La sous-unité 12 comprend un robinet, de préférence de type tout ou rien, ou dispositif de fermeture 5 à commande progressive par une organe ou poignée actionnable manuellement par l'opérateur en les positions d'ouverture et de fermeture, ou inversement.

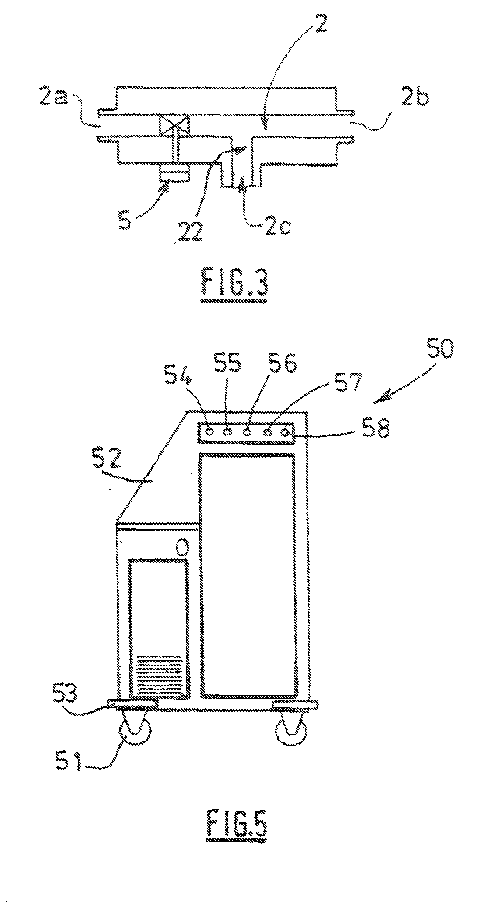

La sous-unité 13 comprend une prise de raccordement qui comprend un raccord fileté à son extrémité aval portant le troisième orifice 2c normalement fermé par un bouchon d'obturation 6 ou analogue qui est lui-même fileté, ledit orifice 2c étant situé vers une unité fonctionnelle de secours telle celle montrée en Figure 5.

Les sous-unités 12, 13 sont en communication d'écoulement fluidique entre elles de manière à former un conduit intérieur qui permet au vide de s'écouler dans la direction de la flèche F au sein du passage principal 2 ou, selon le cas, du passage annexe 22 du corps de vanne 1. En fait, la vanne de l'invention est conçue à et adaptée à la gestion de la continuité d'alimentation de vide ou de dépression que la dépression soit due à une défaillance de la centrale de vide ou bien de l'unité fonctionnelle de secours.

Des moyens de fixation 10, telle qu'une bride de support ou tout dispositif de fixation analogue, est prévue pour soutenir les sous-unités 12, 13 du corps de vanne 1 et faciliter son installation sur une paroi.

Lorsqu'une situation de défaut d'alimentation en vide apparaît au sein du réseau de vide sur lequel est raccordée la vanne de l'invention, l'organe 5 actionnable des moyens de commande peut être actionné par un opérateur pour obturer le passage principal 2 sur lequel est insérée la vanne 1, comme montré en Figure 3.

Par « réseau de vide », on entend une canalisation qui se ramifie ou plusieurs canalisations reliées ou non les unes aux autres et au sein desquelles règne du vide, c'est à dire une dépression, à savoir une pression inférieure à la pression atmosphérique (< 10⁶ Pa). Ce vide est obtenu en reliant fluidiquement le réseau de vide à une ou plusieurs pompes à vide, comme notamment décrit dans le document EP-A-1026567.

Par ailleurs, l'obturateur 6 est enlevé de l'extrémité aval du passage annexe 22 de manière à libérer le troisième orifice 2c située à l'extrémité aval dudit passage annexe 22 auquel est alors raccordée une unité fonctionnelle mobile de secours comprenant une pompe à vide, par l'intermédiaire d'une canalisation, tel qu'un conduit flexible, ce qui permet d'assurer alors le maintien sous vide du réseau de vide puisque l'aspiration de vide, c'est-à-dire la mise en dépression du corps de vanne 1 et du réseau sur lequel est montée la vanne de l'invention, se fait alors grâce à la pompe à vide située dans l'unité mobile de secours.

De manière classique, un tel conduit flexible est doté à ses deux extrémités d'un raccord fileté ou un moyen de raccordement similaire, et un opérateur peut donc le connecter à une prise adaptée située sur l'unité de secours mobile (Fig. 5), d'une part, et à l'extrémité aval portant le troisième orifice 2c du corps de vanne 1 selon l'invention, pour rétablir ainsi la distribution de vide fourni par la pompe à vide de l'unité mobile de secours.

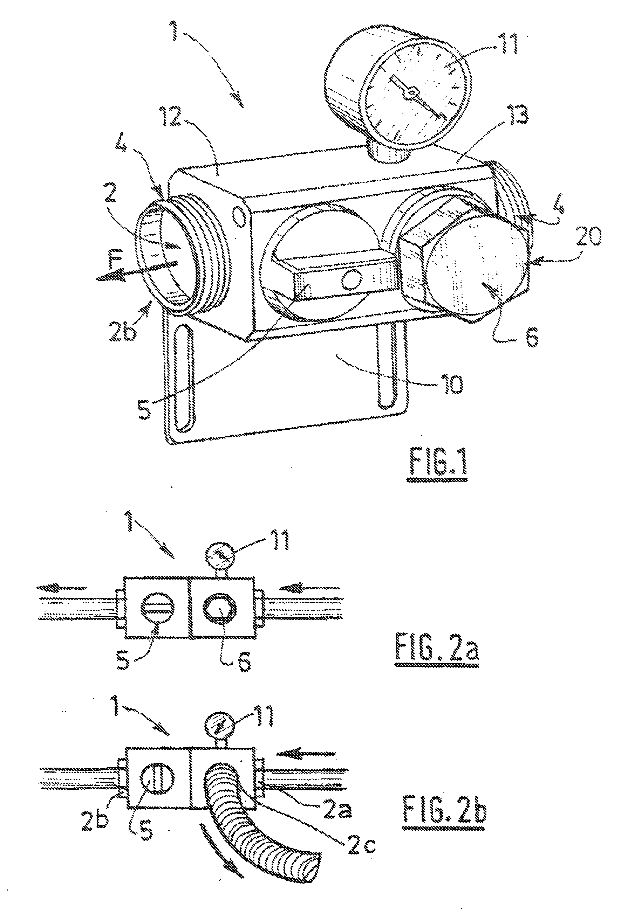

La Figure 4 est une vue éclatée de la vanne de la Figure 1 où l'on voit que le corps de vanne 1 est formé des deux sous-unités 12, 13 ou blocs qui viennent se solidariser l'une à l'autre, par exemple par vissage l'une à l'autre ou via tout autre moyen de fixation.

La première sous-unité 12 comporte la partie du passage principal 2 comprenant l'extrémité aval au niveau de laquelle se situe le deuxième orifice 2b, c'est-à-dire la sortie de vide si l'on considère que le vide traverse le corps 1 de vanne dans le sens de la flèche F de la figure 1, et le dispositif de commande actionnable par l'opérateur.

Plus précisément, le dispositif de commande comporte :
- un organe rotatif 5 actionnable par l'opérateur,
- des joints appelés « rondelles pour le robinet en PTFE » 16 et 21 qui garantissent l'étanchéité de la sphère 14,
- une sphère 14 qui, quand est actionné l'organe rotatif 5, effectue une rotation de 90° et permet de « fermer le passage », de façon à ce que l'alimentation du vide se fasse par la source de gaz de secours et non plus par la centrale de production de vide,
- un goujon 17 qui permet, en s'encastrant dans la sphère 14, de faire faire la rotation à la sphère 14 quand l'élément tournant 5 est actionné par l'opérateur, une virole 18 qui permet d'unir les 2 blocs 12 et 13 du dispositif vanne,
- un joint torique en silicone pour l'étanchéité liée au deuxième bloc de la vanne.

En fait, le dispositif de commande est de préférence un robinet à bille du type tout ou rien dans lequel l'actionnement en rotation de l'organe rotatif 5 engendre la rotation de la sphère 14, via le goujon 17, ce qui permet d'autoriser ou d'interrompre la circulation de vide dans la partie du passage principal 2 aménagée dans la première sous-unité 12 et donc à travers l'orifice aval 2b.

Par ailleurs, la seconde sous-unité 13 comporte la partie du passage principal 2 comprenant l'extrémité amont au niveau de laquelle est situé le premier orifice 2a, c'est-à-dire l'entrée de vide située vers la centrale de production de vide si l'on considère que le vide traverse le corps 1 de vanne dans le sens de la flèche F de la figure 1, ainsi que le passage annexe 22 avec le troisième orifice 2c, lequel passage annexe 22 vient se brancher, c'est-à-dire se raccorder, sur le passage principal 2 à l'intérieur de la seconde sous-unité 13, c'est-à-dire en amont du dispositif de commande de manière à permettre une déviation du vide au travers du troisième orifice 2c, lorsque le moyen d'obturation 6, tel un bouchon ou cache vissé ou analogue, est retiré et libère ledit troisième orifice 2c.

En effet, en fonctionnement normal, un dispositif d'obturation 6 vient boucher le troisième orifice 2c et ainsi empêcher tout passage de vide au travers de ce troisième orifice 2c.

Par contre, le dispositif d'obturation 6 est enlevé lorsque survient un problème de distribution de vide qui oblige à interrompre le passage du vide dans la première sous-unité 12 par actionnement de l'organe 5 rotatif du dispositif de commande 5, 17, 14, comme illustré en Figure 3.

En effet, le dispositif de commande 5, 17, 14 comprend un organe rotatif 5 actionnable par l'opérateur entre une position d'ouverture (Figure 2a) autorisant la circulation de vide dans le passage 2 et une position de fermeture (Figure 2b) interdisant la circulation de vide dans le passage 2.

La Figure 5 est un schéma (vue de côté) d'une unité de secours 50 mobile comprenant un fond 53 doté de roues 51 et surmonté de panneaux 52 latéraux et formant une enceinte dans laquelle sont placées des bouteilles de gaz et une pompe à vide qui sont reliées à des prises de connexion 53 à 58 portées par un ou plusieurs desdits panneaux 52. Ces prises de connexion 53 à 58 permettent d'assurer une alimentation de secours en gaz (O₂, air...) ou en vide en cas de défaillance des sources de gaz ou du réseau de vide.

Il faut noter toutefois que la vanne 1 de l'invention a une structure et un fonctionnement entièrement indépendants d'une telle unité de secours 50 mobile à laquelle elle peut être raccordée. Il est donc possible d'associer la vanne 1 de l'invention aux installations de distribution de gaz médicaux indépendamment de la présence d'une telle unité de secours mobile 50. A noter que le fait que la vanne soit compacte et soit déjà prédisposée avec un vacuomètre incorporé et ce, à un emplacement destiné à recevoir le capteur de dépression (vacuostat) est également une caractéristique originale et non courante pour une vanne de sectionnement.

En d'autres termes, selon l'invention, on incorpore une vanne de sectionnement du vide « distribué » par le réseau de distribution centralisé sur le réseau de vide de l'hôpital ou analogue, laquelle vanne permet à un opérateur de basculer immédiatement et simplement l'alimentation en vide vers une source de vide de secours, de manière à assurer une continuité de distribution de vide dans les différents sites où il doit être utilisé au sein du bâtiment hospitalier.

## Revendications

1. Vanne de sectionnement avec entrée d'urgence, en particulier pour canalisation ou réseau de vide, comprenant un corps (1) de vanne traversé par un passage principal (2) de fluide entre un premier orifice (2a) située à une extrémité amont dudit passage principal (2) et un deuxième orifice (2b) situé à une extrémité aval dudit passage principal (2), ledit corps (1) de vanne comprenant en outre :
- un dispositif de commande agencé sur ledit passage principal (2), comportant un organe (5) actionnable manuellement par un opérateur et mobile entre au moins :
. une position d'ouverture dans laquelle ledit dispositif de commande (5, 17, 14) autorise une communication fluidique entre les premier et deuxième orifices (2a, 2b), et
. une position de fermeture dans laquelle ledit dispositif de commande (5, 17, 14) interrompt toute communication fluidique entre les premier et deuxième orifices (2a, 2b), et
- un passage annexe (22) de fluide, relié fluidiquement par son extrémité amont audit passage principal (2) entre le dispositif de commande (5) et le premier orifice (2a), ledit passage annexe (22) comprenant un troisième orifice (2c) à son extrémité aval,
**caractérisée en ce qu'**un dispositif d'obturation (6) vient obturer le troisième orifice (2c), lorsque le dispositif de commande (5) est en position d'ouverture.

2. Vanne selon la revendication 1, **caractérisée en ce que** le dispositif d'obturation (6) est un bouchon fileté qui fait étanchéité quand il est fermé.

3. Vanne selon l'une des revendications précédentes, **caractérisée en ce que** les extrémités amont et aval du passage principal (2) portant les premier et deuxièmes orifices (2a, 2b), respectivement, et l'extrémité aval du passage annexe (22) portant le troisième orifice (2c) sont munies de moyens de raccordement (4) aptes à et conçus pour permettre le raccordement de canalisations auxdites extrémités, de préférence les moyens de raccordement (4) sont ou comprennent des filetages ou des taraudages.

4. Vanne selon l'une des revendications précédentes, **caractérisée en ce que** le dispositif de commande (5, 17, 14) comprend un organe rotatif actionnable par l'opérateur entre lesdites positions d'ouverture et de fermeture.

5. Vanne selon l'une des revendications précédentes, **caractérisée en ce que** le corps de vanne (1) est formé de deux sous-unités (12, 13) venant se solidariser l'une à l'autre, la première sous-unité (12) comportant la partie du passage principal (2) comprenant l'extrémité aval dudit passage principal (2) avec le deuxième orifice (2b) et le dispositif de commande (5), et la seconde sous-unité (13) comportant la partie du passage principal (2) comprenant l'extrémité amont dudit passage principal (2) avec le premier orifice (2a) et le passage annexe (22) avec le troisième orifice (2c).

6. Vanne selon l'une des revendications précédentes, **caractérisée en ce qu'**un manomètre de dépression (11) est relié au passage principal (2) ou au passage annexe (22) entre le dispositif de commande (5) et le premier orifice (2a) ou le troisième orifice (2c).

7. Vanne selon l'une des revendications précédentes, **caractérisée en ce que** le corps (1) de vanne comporte un dispositif de fixation apte à et conçu pour fixer ledit corps de vanne (1) à un support, en particulier à une paroi.

8. Vanne selon l'une des revendications précédentes, **caractérisée en ce que** le dispositif de commande (5) est un robinet à bille du type tout ou rien.

9. Vanne selon l'une des revendications précédentes, **caractérisée en ce qu'**elle comporte un orifice permettant le raccordement d'un capteur de dépression (30).

10. Vanne selon la revendication 2, **caractérisée en ce que** le troisième orifice est conçu pour et adapté à la connexion d'un tube flexible relié à un dispositif de secours.

## Claims

1. Block valve with emergency input, in particular for vacuum line or network, comprising a valve body (1) traversed by a main fluid passage (2) between a first orifice (2a) located at an upstream end of the said main passage (2) and a second orifice (2b) located at a downstream end of the said main passage (2), the said valve body (1) further comprising:
- a control device arranged on the said main passage (2), comprising a member (5) operable manually by an operator and movable between at least:
. an open position in which the said control device (5, 17, 14) allows fluid communication between the first and second orifices (2a, 2b), and
. a closed position in which the said control device (5, 17, 14) interrupts any fluid communication between the first and second orifices (2a, 2b), and
- an auxiliary fluid passage (22) fluidly connected via its upstream end to the said main passage (2) between the control device (5) and the first orifice (2a), the said auxiliary passage (22) comprising a third orifice (2c) at its downstream end,
**characterized in that** a shutter device (6) shuts the third orifice (2c), when the control device (5) is in the open position.

2. Valve according to Claim 1, **characterized in that** the shutter device (6) is a threaded plug (6) which provides tightness when it is closed.

3. Valve according to one of the preceding claims, **characterized in that** the upstream and downstream ends of the main passage (2) having the first and second orifices (2a, 2b), respectively, and the downstream end of the auxiliary passage (22) having the third orifice (2c), are provided with connecting means (4) suitable and designed for connecting lines to the said ends, preferably the connecting means (4) are or comprise outer or inner threads.

4. Valve according to one of the preceding claims, **characterized in that** the control device (5, 17, 14) comprises a rotating member operable by the operator between the said open and closed positions.

5. Valve according to one of the preceding claims, **characterized in that** the valve body (1) is formed of two sub-units (12, 13) which are joined to one another, the first sub-unit (12) comprising the part of the main passage (2) comprising the downstream end of the said main passage (2) with the second orifice (2b) and the control device (5), and the second sub-unit (13) comprising the part of the main passage (2) comprising the upstream end of the said main passage (2) with the first orifice (2a) and the auxiliary passage (22) with the third orifice (2c).

6. Valve according to one of the preceding claims, **characterized in that** a negative pressure gauge (11) is connected to the main passage (2) or to the auxiliary passage (22) between the control device (5) and the first orifice (2a) or the third orifice (2c).

7. Valve according to one of the preceding claims, **characterized in that** the valve body (1) comprises a fastening device suitable and designed for fastening the said valve body (1) to a support, in particular to a wall.

8. Valve according to one of the preceding claims, **characterized in that** the control device (5) is an on/off type ball valve.

9. Valve according to one of the preceding claims, **characterized in that** it comprises an orifice for connection to a negative pressure sensor (30).

10. Valve according to Claim 2 **characterized in that** the third orifice is designed and suitable for the connection of a flexible tube connected to a standby device.

## Patentansprüche

1. Absperrventil mit Notzugang, insbesondere für Vakuumleitung oder -netz, das einen Ventilkörper (1) aufweist, der von einem Hauptfluidkanal (2) zwischen einer ersten Öffnung (2a), die sich an einem stromaufwärtigen Ende des Hauptkanals (2) befindet, und einer zweiten Öffnung (2b), die sich an einem stromabwärtigen Ende des Hauptkanals (2) befindet, durchquert wird, wobei der Ventilkörper (1) des Weiteren Folgendes umfasst:
- eine an dem Hauptkanal (2) angeordnete Bedienvorrichtung, die ein von einem Bediener manuell betätigbares Glied (5) aufweist, das zwischen mindestens:
- einer Öffnungsstellung, in der die Bedienvorrichtung (5, 17, 14) eine Fluidverbindung zwischen der ersten und der zweiten Öffnung (2a, 2b) gestattet, und
- einer Schließstellung, in der die Bedienvorrichtung (5, 17, 14) jegliche Fluidverbindung zwischen der ersten und der zweiten Öffnung (2a, 2b) unterbricht,
beweglich ist, und
- einen Nebenfluidkanal (22), der durch sein stromaufwärtiges Ende zwischen der Bedienvorrichtung (5) und der ersten Öffnung (2a) mit dem Hauptkanal (2) strömungsverbunden ist, wobei der Nebenkanal (22) an seinem stromabwärtigen Ende eine dritte Öffnung (2c) aufweist,
**dadurch gekennzeichnet, dass** eine Schließvorrichtung (6) die dritte Öffnung (2c) schließt, wenn sich die Bedienvorrichtung (5) in Öffnungsstellung befindet.

2. Ventil nach Anspruch 1, **dadurch gekennzeichnet, dass** die Schließvorrichtung (6) ein Schraubverschluss ist, der abdichtet, wenn er geschlossen ist.

3. Ventil nach einem der vorhergehenden Ansprüche, **dadurch gekennzeichnet, dass** das stromaufwärtige und das stromabwärtige Ende des Hauptkanals (2), die mit der ersten bzw. zweiten Öffnung (2a, 2b) versehen sind, und das stromabwärtige Ende des Nebenkanals (22), das mit der dritten Öffnung (2c) versehen ist, mit Verbindungsmitteln (4) versehen sind, die dazu in der Lage und ausgeführt sind, die Verbindung von Leitungen mit den Enden zu gestatten, wobei die Verbindungsmittel (4) vorzugsweise Innengewinde oder Außengewinde sind.

4. Ventil nach einem der vorhergehenden Ansprüche, **dadurch gekennzeichnet, dass** die Bedienvorrichtung (5, 17, 14) ein von dem Bediener zwischen der Öffnungs- und der Schließstellung betätigbares Drehglied umfasst.

5. Ventil nach einem der vorhergehenden Ansprüche, **dadurch gekennzeichnet, dass** der Ventilkörper (1) von zwei Untereinheiten (12, 13) gebildet wird, die fest miteinander verbunden sind, wobei die erste Untereinheit (12) den Teil des Hauptkanals (2) aufweist, der das stromabwärtige Ende des Hauptkanals (2) mit der zweiten Öffnung (2b) und die Bedienvorrichtung (5) enthält, und die zweite Untereinheit (13) den Teil des Hauptkanals (2) aufweist, der das stromaufwärtige Ende des Hauptkanals (2) mit der ersten Öffnung (2a) und den Nebenkanal (22) mit der dritten Öffnung (2c) enthält.

6. Ventil nach einem der vorhergehenden Ansprüche, **dadurch gekennzeichnet, dass** ein Unterdruckmesser (11) mit dem Hauptkanal (2) oder dem Nebenkanal (22) zwischen der Bedienvorrichtung (5) und der ersten Öffnung (2a) oder der dritten Öffnung (2c) verbunden ist.

7. Ventil nach einem der vorhergehenden Ansprüche, **dadurch gekennzeichnet, dass** der Ventilkörper (1) eine Befestigungsvorrichtung aufweist, die dazu in der Lage und ausgeführt ist, den Ventilkörper (1) an einem Träger, insbesondere an einer Wand, zu befestigen.

8. Ventil nach einem der vorhergehenden Ansprüche, **dadurch gekennzeichnet, dass** die Bedienvorrichtung (5) ein Ein-Aus-Kugelventil ist.

9. Ventil nach einem der vorhergehenden Ansprüche, **dadurch gekennzeichnet**, das es eine Öffnung aufweist, die den Anschluss eines Unterdrucksensors (30) gestattet.

10. Ventil nach Anspruch 2, **dadurch gekennzeichnet, dass** die dritte Öffnung zur Verbindung mit einem an einem Notgerät angeschlossenen flexiblen Rohr konzipiert und ausgeführt ist.
